# EUROPEAN PATENT APPLICATION

(11) **EP 4 778 827 A1**
(43) Date of publication of application: **22.07.2026**
(21) Application number: 26151990.4
(22) Date of filing: 15.01.2026
(51) Int. Cl.: B63H 20/00, B63H 20/32, B63H 21/17, B63H 23/24, B63B 79/10

(54) **ELECTRIC BOAT PROPULSION DEVICE AND BOAT**

(30) Priority: 16.01.2025 JP 2025005874
(71) Applicant: Yamaha Hatsudoki Kabushiki Kaisha, Iwata-shi, Shizuoka 438-8501 (JP)
(72) Inventor: SUETAKE, Keiichi, Iwata-shi, Shizuoka 438-8501 (JP); TAKEDA, Kentaro, Iwata-shi, Shizuoka 438-8501 (JP)
(74) Representative: Grünecker Patent- und Rechtsanwälte PartG mbB

(57) **Abstract**

An electric boat propulsion device includes a cylindrical duct; a propeller rotatably supported inside the duct, the propeller having blades arranged around a propeller axis extending along a central axis of the duct, and a cylindrical rim surrounding the blades; and an electric motor that rotates the propeller relative to the duct, the electric motor having a stator provided on the duct and a rotor provided on the rim. The duct has an accommodation space, and an inner wall constituting the accommodation space includes a conductive wall. The electric boat propulsion device further includes a circuit board including a contact region that contacts the conductive wall and a non-contact region separated from the conductive wall, the circuit board having a detection sensor that outputs a signal corresponding to a rotation angle of the rotor, and a circuit pattern formed in the non-contact region so as to avoid the contact region.

## Description

The present invention relates to an electric boat propulsion device and a boat.

A rim drive-type electric boat propulsion device is known. Such an electric boat propulsion device includes a cylindrical duct, a propeller rotatably supported inside the duct, an electric motor that rotates the propeller relative to the duct, and a circuit board. The propeller has a plurality of blades arranged around a propeller axis extending along a central axis of the duct, and a cylindrical rim that surrounds the plurality of blades. The electric motor has a stator provided on the duct and a rotor provided on the rim. On the circuit board, for example, various electronic components and circuit patterns for controlling the rotation of the electric motor are arranged (for example, JP 2013-100013 A).

It is the object of the present invention to provide an electric boat propulsion device having a high reliability.

According to the present invention said object is solved by an electric boat propulsion device having the features of independent claim 1. Preferred embodiments are laid down in the dependent claims. When considering adopting a configuration in which the duct includes a conductive wall having conductivity in a rim drive-type electric boat propulsion device, and adopting such a configuration, there is room for examination regarding the arrangement relationship between the conductive wall of the duct and the circuit pattern of the circuit board.

The technique disclosed in the present specification can be realized, for example, as the following aspects.

An electric boat propulsion device disclosed in the present specification includes: a cylindrical duct; a propeller rotatably supported in the duct, the propeller having a plurality of blades arranged around a propeller axis extending along a central axis of the duct, and a cylindrical rim surrounding the plurality of blades; and an electric motor that rotates the propeller relative to the duct, the electric motor having a stator provided on the duct and a rotor provided on the rim, wherein the duct has an accommodation space formed therein, and an inner wall constituting the accommodation space includes a conductive wall having conductivity, and the electric boat propulsion device further includes a circuit board including a contact region that contacts the conductive wall and a non-contact region that is separated from the conductive wall, the circuit board having a detection sensor that outputs a detection signal corresponding to a rotation angle of the rotor, and a circuit pattern formed in the non-contact region so as to avoid the contact region. According to such a configuration, short-circuiting between the circuit pattern on the circuit board and the conductive wall of the duct is suppressed.

The electric boat propulsion device described above may be configured to further include a steering device arranged on a radial direction outer side of the duct, the steering device having a steering shaft, and rotating the duct around the steering shaft, wherein the circuit board is arranged on the steering device side of the duct. According to such a configuration, the circuit board is prevented from being placed underwater.

The electric boat propulsion device described above may be configured such that the circuit board is arranged on an outer side of the rotor in a radial direction of the duct. According to such a configuration, for example, an increase in size in the axial direction of the duct is suppressed compared to a configuration in which the circuit board is arranged at the same position as the rotor in the radial direction of the duct.

The electric boat propulsion device described above may be configured such that at least a portion of the circuit board overlaps with the rotor when viewed in a radial direction of the duct. According to such a configuration, for example, an increase in size in the axial direction of the duct is suppressed compared to a configuration in which the circuit board does not overlap with the rotor when viewed in the radial direction of the duct.

The electric boat propulsion device described above may be configured such that the circuit board is located at a position overlapping with the stator when viewed in a direction along the central axis. According to such a configuration, for example, an increase in size in the radial direction of the duct is suppressed compared to a configuration in which the circuit board is arranged at a position shifted from the stator when viewed in a direction along the central axis.

The electric boat propulsion device described above may be configured such that the detection sensor has a Hall element, the circuit board has an inner surface facing a radial direction inner side of the duct, the inner surface includes the contact region and the non-contact region, and the detection sensor is arranged in the non-contact region. According to such a configuration, for example, the detection accuracy of the rotation angle of the rotor by the detection sensor is improved compared to a configuration in which the detection sensor is arranged on an outer surface of the circuit board.

The electric boat propulsion device described above may be configured such that the non-contact region in which the detection sensor is arranged is located at a position overlapping with the rotor when viewed in a radial direction of the duct, and the contact region is located at a position shifted in a direction along the central axis with respect to the rotor when viewed in the radial direction of the duct. According to such a configuration, for example, because the distance between the detection sensor and the rotor is shortened compared to a configuration in which the non-contact region in which the detection sensor is arranged is located at a position shifted in the central axis direction with respect to the rotor when viewed in the radial direction of the duct, the detection accuracy of the rotation angle of the rotor by the detection sensor is improved.

The electric boat propulsion device described above may be configured such that a wall thickness of a non-contact section of the inner wall opposite the non-contact region in which the detection sensor is arranged is thinner than a wall thickness of a contact section opposite the contact region. According to such a configuration, for example, a decrease in the detection accuracy of the rotation angle of the rotor by the detection sensor due to the wall interposed between the detection sensor and the rotor is suppressed compared to a configuration in which the wall thickness opposite the non-contact region in which the detection sensor is arranged greater than or equal to the wall thickness opposite the contact region.

The electric boat propulsion device described above may be configured such that one surface of the circuit board includes the contact region and the non-contact region, and an area of the contact region on the one surface is larger than an area of the non-contact region. According to such a configuration, for example, the circuit board is arranged more stably with respect to the duct compared to a configuration in which the area of the contact region on one surface of the circuit board is less than or equal to the area of the non-contact region.

The electric boat propulsion device described above may be configured such that a fastening member that passes through the contact region of the circuit board and joins the contact region and the conductive wall. According to such a configuration, the contact region where no circuit pattern is formed is effectively used to fix the circuit board to the duct.

The electric boat propulsion device described above may be configured such that the fastening member has conductivity, and a ground pattern of the circuit pattern is electrically connected to the conductive wall via the fastening member. According to such a configuration, the ground pattern of the circuit board is electrically connected to the duct.

The electric boat propulsion device described above may be configured such that the detection sensor has a Hall element, and the Hall element is arranged at one end portion of the circuit board, and the fastening member is arranged at an other end portion of the circuit board. According to such a configuration, a decrease in the detection accuracy of the rotation angle of the rotor by the detection sensor due to electrical influence from the fastening member is suppressed.

The electric boat propulsion device described above may be configured such that one surface of the circuit board includes the contact region and the non-contact region, and the electric boat propulsion device further includes a connector arranged in a region on an other surface of the circuit board on an opposite side to the contact region. According to such a configuration, the connector is stably arranged on the circuit board.

The boat described above may be configured so as to include a boat body, and the electric boat propulsion device according to any one of claims 1 to 13 arranged on the boat body. According to such a configuration, short-circuiting between the circuit pattern on the circuit board and the conductive wall of the duct is suppressed.

An electric boat propulsion device disclosed in the present specification includes: a cylindrical duct; a propeller rotatably supported in the duct, the propeller having a plurality of blades arranged around a propeller axis extending along a central axis of the duct, and a cylindrical rim surrounding the plurality of blades; and an electric motor that rotates the propeller relative to the duct, the electric motor having a stator provided on the duct and a rotor provided on the rim, wherein the duct has an accommodation space formed therein, and an inner wall constituting the accommodation space includes a conductive wall having conductivity, and the electric boat propulsion device further includes a circuit board including a contact region that contacts the conductive wall and a non-contact region that is separated from the conductive wall, the circuit board having a circuit pattern formed in the non-contact region so as to avoid the contact region. According to such an electric boat propulsion device, short-circuiting between the circuit pattern on the circuit board and the conductive wall of the duct is suppressed.

Note that the technique disclosed in the present specification can be realized in various forms, for example, in the form of an electric boat propulsion device, a boat control system including an electric boat propulsion device, a boat including an electric boat propulsion device, and the like.

### ADVANTAGEOUS EFFECTS OF INVENTION

According to the technique disclosed by the present specification, short-circuiting between the circuit pattern on the circuit board and the conductive wall of the duct is suppressed.

### BRIEF DESCRIPTION OF THE DRAWINGS

FIG. 1 is a perspective view schematically showing a configuration of a boat of an embodiment.
FIG. 2 is a side view showing a configuration of an electric propulsion device.
FIG. 3 is a schematic diagram showing a configuration of a drive unit.
FIG. 4 is a block diagram showing a configuration of a boat control system in a boat.
FIG. 5 is a side view showing enlarged an internal configuration of an electric propulsion device.
FIG. 6 is a top view showing a configuration of a circuit board.
FIG. 7 is a bottom view showing a configuration of the circuit board.

### DETAILED DESCRIPTION OF THE PREFERRED EMBODIMENTS

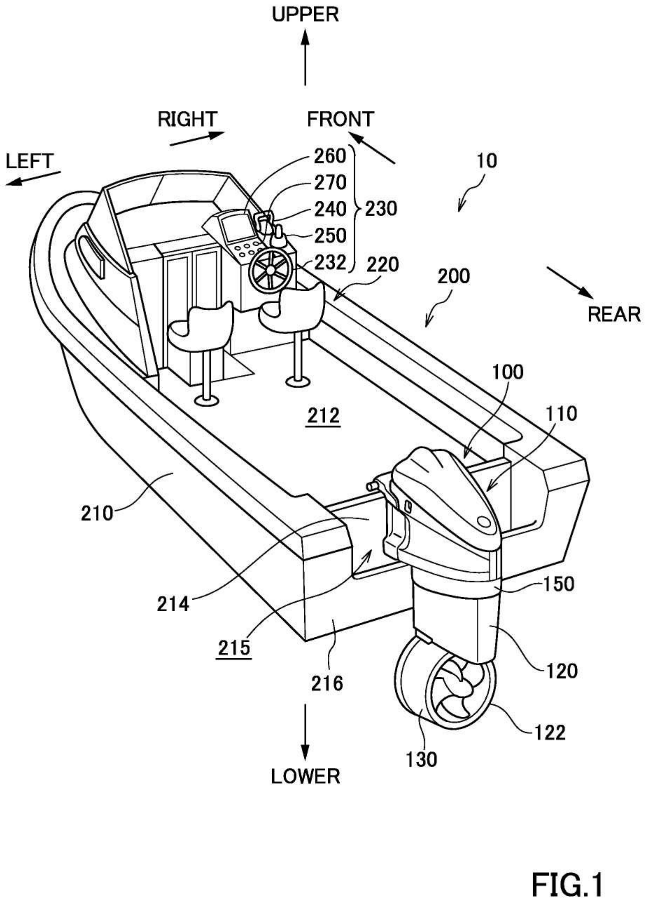

FIG. 1 is a perspective view schematically showing a configuration of a boat 10 of the present embodiment. In FIG. 1 and other drawings described later, arrows indicating each direction based on the position of the boat 10 may be shown. Specifically, in each drawing, arrows representing front (FRONT), rear (REAR), left (LEFT), right (RIGHT), upper (UPPER), and lower (LOWER) directions may be shown. The front-rear direction, left-right direction, and upper-lower direction (vertical direction) are directions that are orthogonal to each other.

As shown in FIG. 1, the boat 10 includes a boat body 200 and an electric propulsion device 100. The electric propulsion device 100 employs a rim drive system as a drive system of an electric motor 134, which will be described later. The electric propulsion device 100 includes a rim 137, described later, that connects a plurality of blades 131 of a propeller 132. The electric propulsion device 100 is a system in which the driving force of the electric motor 134 is transmitted to, and rotates, the rim 137, rather than being transmitted to a shaft of the propeller 132 described later. The electric propulsion device 100 is an example of an electric boat propulsion device.

The boat body 200 is a section of the boat 10 on which an operator (occupant) boards. The boat body 200 has a boat main body 210, a pilot seat 220, and a steering unit 230.

A living space 212 is formed in the boat main body 210. The pilot seat 220 is installed in the living space 212. The boat body 200 further has a partition wall 214 and a transom 216. The partition wall 214 partitions the rear side of the living space 212. The transom 216 is located at the rear end of the boat body 200. A space 215 exists between the transom 216 and the partition wall 214 in the front-rear direction.

The steering unit 230 is a device for maneuvering a boat. The steering unit 230 is installed near the pilot seat 220. The steering unit 230 has a steering wheel 232, a shift/throttle lever 240, a joystick unit 250, a display device 260, and an input device 270.

The steering wheel 232 is an operation device for performing steering operations of the boat 10. The shift/throttle lever 240 is an operation device for performing shift operations and propulsion force change operations of the boat 10. The joystick unit 250 is an operation device for performing steering operations, shift operations, and propulsion force change operations of the boat 10. The display device 260 is, for example, a liquid crystal display and displays various images related to the boat 10 (such as images for operation). The input device 270 is, for example, a button for performing operations to change the boat maneuvering mode or the like. The input device 270 includes a light-emitting diode (LED).

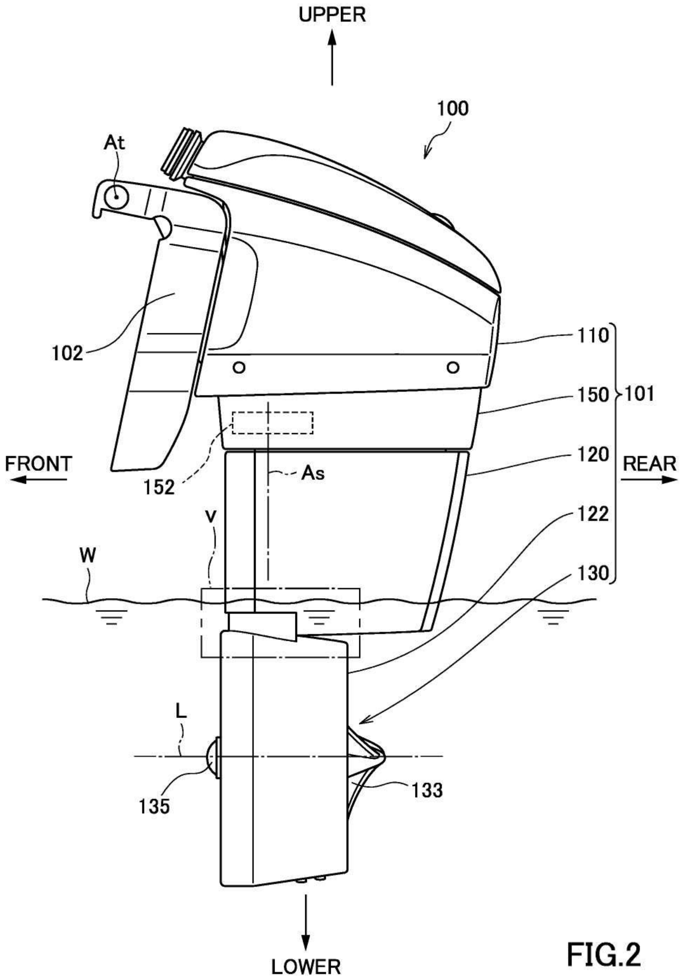

FIG. 2 is a side view showing a configuration of the electric propulsion device 100. The electric propulsion device 100 is a device that generates thrust to propel the boat 10. The electric propulsion device 100 is an electric-type propulsion device driven by an electric motor 134. The electric propulsion device 100 of the present embodiment is an outboard motor. Hereinafter, unless otherwise specified, the electric propulsion device 100 in a reference posture will be described. The reference posture is the posture of the electric propulsion device 100 when the boat 10 is cruising (the posture shown in FIGS. 1 and 2), and is a posture in which a propeller rotation axis L of the propeller 132, described later, extends in the front-rear direction. Each of the front-rear direction, left-right direction, and upper-lower direction are defined based on the electric propulsion device 100 in the reference posture.

The electric propulsion device 100 is attached to the transom 216 located at the rear portion (stern) of the boat body 200 (see FIG. 1). The electric propulsion device 100 has a propulsion device main body 101 and a suspension device 102.

The propulsion device main body 101 has a cowl 110, a middle housing 150, a lower housing 120, a duct 122, and a drive unit 130.

The cowl 110 is located at an upper portion of the electric propulsion device 100. The cowl 110 is a cover that accommodates various wiring and the like.

The middle housing 150 is located below the cowl 110 in the electric propulsion device 100. The middle housing 150 is a cover that accommodates a steering device 152 and an SCU 154 described later, various wiring, and the like.

The lower housing 120 is located below the middle housing 150 in the electric propulsion device 100. The lower housing 120 is a cover that accommodates an MCU 139 described later, various wiring, and the like. The lower housing 120 is attached to the middle housing 150 so as to be rotatable around a steering shaft As extending in the upper-lower direction.

The duct 122 is located below the lower housing 120 in the electric propulsion device 100. The duct 122 is a tubular body extending in the front-rear direction. The duct 122 is arranged at a position lower than a water surface W in the reference posture (see FIG. 2). The drive unit 130 is arranged on the radial direction inner side of the duct 122. On the radial direction inner side of the duct 122, a stator fin 133 and a bearing 135 are provided (see FIG. 2). The bearing 135 supports a propeller 132, described later, so as to be rotatable about a propeller rotation axis L. The stator fin 133 has a plurality of fins (for example, three fins). The plurality of fins are radially arranged around the bearing 135. The plurality of fins are arranged at equal intervals around the propeller rotation axis L. The plurality of fins are fixed to the duct 122. The plurality of fins are provided behind the propeller 132 so as to protrude rearward from the duct 122 (see FIGS. 1 and 2).

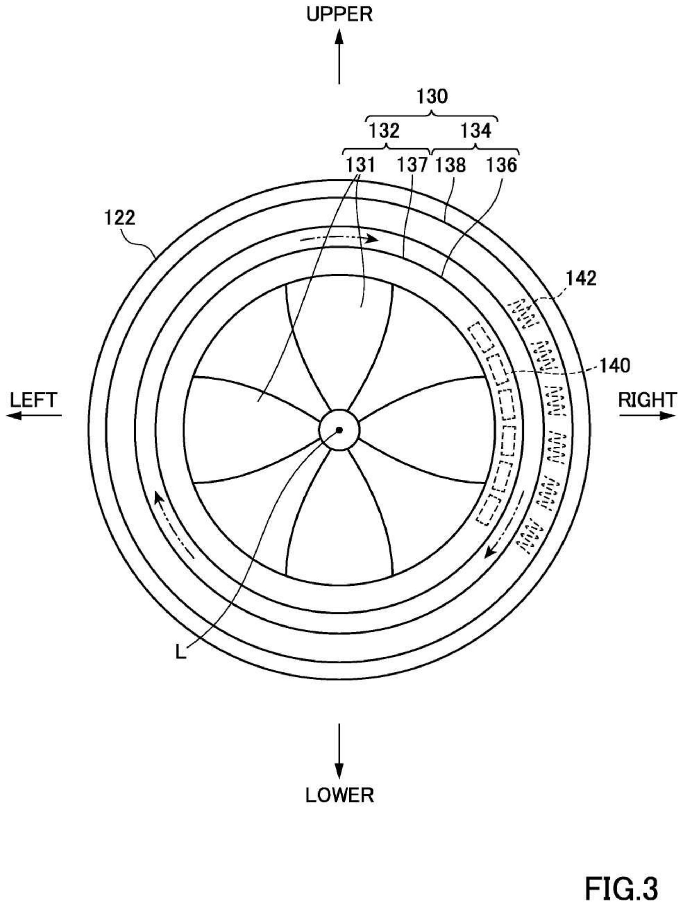

FIG. 3 is a schematic diagram showing the configuration of the drive unit 130. The drive unit 130 generates thrust to propel the boat 10. The drive unit 130 includes the propeller 132 and the electric motor 134.

The propeller 132 is a rotating body having a plurality of blades 131. The propeller 132 generates thrust as a result of rotating. The propeller 132 is located on the radial direction inner side of the duct 122. The propeller 132 is rotatable about a horizontal direction propeller rotation axis L. The propeller rotation axis L is parallel to the central axis of the duct 122. The entire circumference of the propeller 132 is covered by the duct 122. Specifically, the propeller 132 has a plurality of (for example, four) blades 131 and the rim 137. The plurality of blades 131 are arranged around the propeller rotation axis L. The rim 137 is an annular member and surrounds the plurality of blades 131. The rim 137 supports the radial direction outer end portions of each of the plurality of blades 131. The rim 137 integrally rotates with the plurality of blades 131 about the propeller rotation axis L.

The electric motor 134 rotates the propeller 132. The electric motor 134 includes a rotor 136 and a stator 138.

The rotor 136 is a tubular body extending in the front-rear direction. The rotor 136 is provided on the rim 137 and is supported so as to be rotatable relative to the duct 122. The rotor 136 rotates about the propeller rotation axis L relative to the stator 138. The propeller 132 is arranged on the radial direction inner side of the rotor 136. The propeller 132 is fixed to the rim 137 (rotor 136). The propeller 132 rotates together with the rim 137 (rotor 136). The rotor 136 includes a plurality of permanent magnets 140. In FIG. 3, only one of the plurality of permanent magnets 140 is denoted by a reference sign, and the reference signs of the other permanent magnets 140 are omitted. The plurality of permanent magnets 140 are arranged along the circumferential direction of the rotor 136.

The stator 138 is a tubular body extending in the front-rear direction. The stator 138 is arranged on the radial direction outer side of the rotor 136. The stator 138 is arranged on the same axis as the rotor 136. The stator 138 is fixed to the duct 122. The stator 138 includes a plurality of coils 142. In FIG. 3, only one of the plurality of coils 142 is denoted by a reference sign, and the reference signs of the other coils 142 are omitted. The plurality of coils 142 are arranged along the circumferential direction of the stator 138.

When the plurality of coils 142 are energized, an electromagnetic force is generated that rotates the rotor 136. With such a configuration, the propeller 132 generates a forward propulsion force when the rotor 136 of the electric motor 134 rotates in the forward direction, and generates a rearward propulsion force when the rotor 136 of the electric motor 134 rotates in the reverse direction.

The suspension device 102 is a device that suspends the propulsion device main body 101 from the boat body 200. The suspension device 102 rotates the propulsion device main body 101 around a tilt axis At (see FIG. 2). As a result, a tilt operation that rotates the propulsion device main body 101 in the upper-lower direction relative to the boat body 200 is realized.

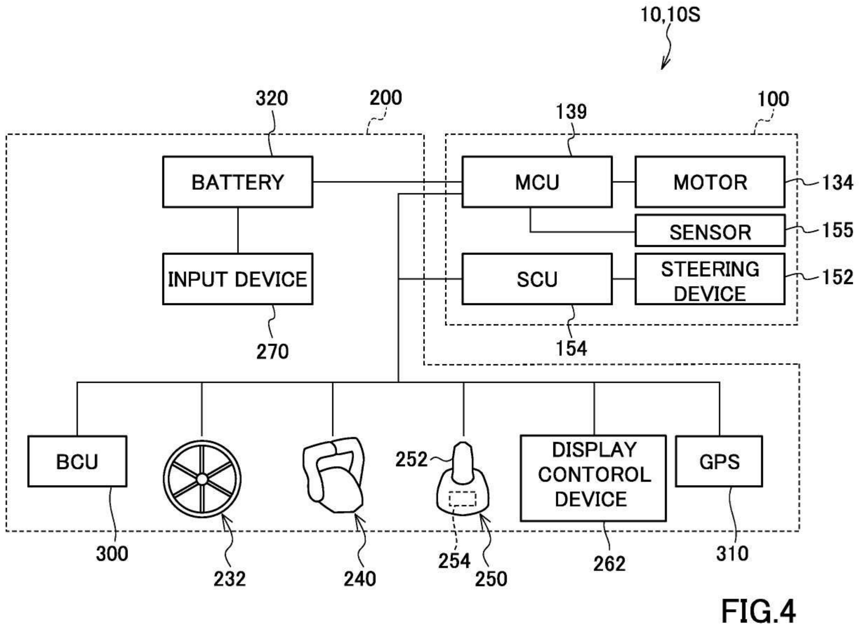

FIG. 4 is a block diagram showing an internal configuration of a boat control system 10S in the boat 10. The components provided in the boat control system 10S are communicably connected to each other, for example, by command line processor (CLP) communication. As shown in FIG. 4, the boat body 200 has a BCU 300, a GPS 310, a battery 320, and a display control device 262.

A boat control unit (BCU) 300, for example, controls the overall operation of the boat 10 based on signals transmitted from each component of the boat control system 10S. The BCU 300 includes, for example, a CPU, a multi-core CPU, and a programmable device (such as a field programmable gate array (FPGA) or a programmable logic device (PLD)).

A global positioning system (GPS) 310 is a device that determines the current position of the boat 10 using signals received from satellites. The battery 320 is a power storage device. The battery 320 supplies power to the electric motor 134 and the input device 270. The display control device 262 controls the display of the display device 260.

The electric propulsion device 100 has the electric motor 134 described above, a steering device 152, an MCU 139, an SCU 154, and a detection sensor 155.

The steering device 152 is a device that controls the steering angle of the boat 10. The steering device 152 is accommodated in the middle housing 150. The steering device 152 includes, for example, an electric motor for steering (not shown) and the steering shaft As extending in the upper-lower direction (see FIG. 2). When the steering angle is changed by the steering device 152, for example, the electric motor rotates the steering shaft As. When the steering shaft As rotates, the lower housing 120 connected to the steering shaft As and the drive unit 130 connected to the lower housing 120 pivot about an axis extending in the upper-lower direction. As a result, the steering angle of the boat 10 is changed.

The motor control unit (MCU) 139 drives the electric motor 134. The MCU 139 is accommodated in the lower housing 120.

The steering control unit (SCU) 154 controls the operation of the steering device 152. The SCU 154 includes, for example, a CPU, a multi-core CPU, and a programmable device (such as a field programmable gate array (FPGA) or a programmable logic device (PLD)). The SCU 154 is accommodated in the middle housing 150.

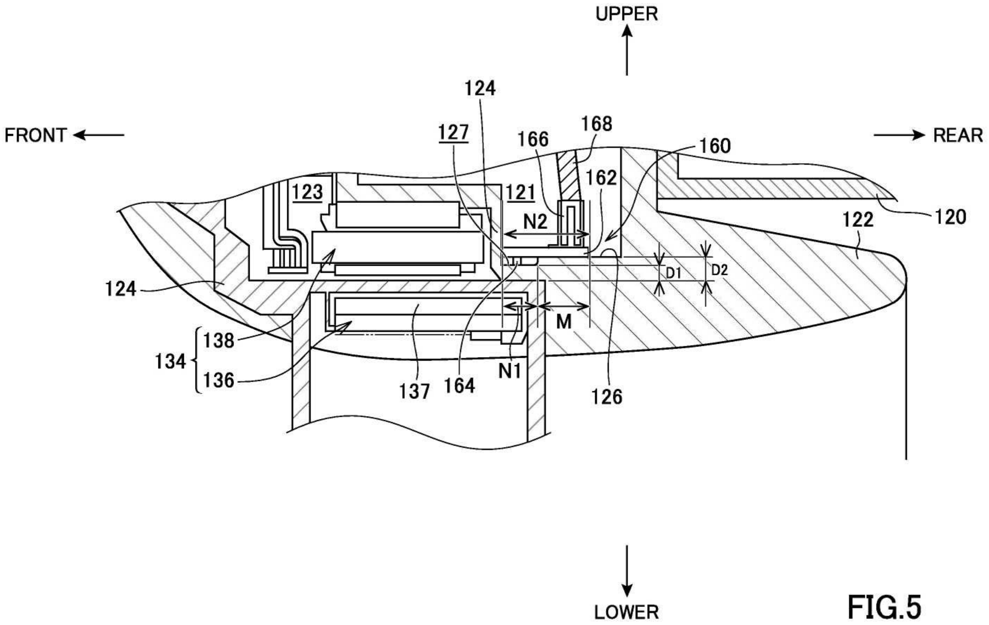

FIG. 5 is a side view showing enlarged an internal configuration of the electric propulsion device 100. FIG. 5 shows an enlarged view of the internal configuration of section V of the electric propulsion device 100 in FIG. 2. The cross-sectional configuration is shown for a section of the internal configuration of section V. Here, section V is an upper section of the duct 122, and the upper section is joined to the lower housing 120. FIG. 5 shows the upper sections of the electric motor 134 (rotor 136 and stator 138) and the rim 137.

The duct 122 has an accommodation space 121. The accommodation space 121 is located in the upper section of the duct 122. The accommodation space 121 is arranged behind the stator 138. The accommodation space 121 is a recess that opens toward the radial direction outer side of the duct 122. The duct 122 is formed of a conductive material (for example, a metal). Therefore, the entire inner wall constituting the accommodation space 121 is a conductive wall having conductivity. The conductive wall is electrically continuous with the outer surface of the duct 122. In the present embodiment, the entire duct 122 is formed of aluminum to reduce the weight of the electric propulsion device 100. The stator 138 is accommodated in a stator accommodation chamber 123. The accommodation space 121 and the stator accommodation chamber 123 are separated by a partition wall 124.

A circuit board 160 is arranged on a bottom wall 126 located on the propeller rotation axis L side (rotor 136 side) of the inner wall constituting the accommodation space 121. In other words, the circuit board 160 is arranged on the steering device 152 side of the duct 122. The circuit board 160 is arranged further toward the outer side in the radial direction of the rotor 136 than the duct 122. When viewed in the radial direction of the duct 122 (upper direction view in FIG. 5), a front section of the bottom wall 126 and a rear section of the rotor 136 overlap each other. A recess 127 is formed in the front end section of the bottom wall 126. The recess 127 opens toward the radial direction outer side of the duct 122.

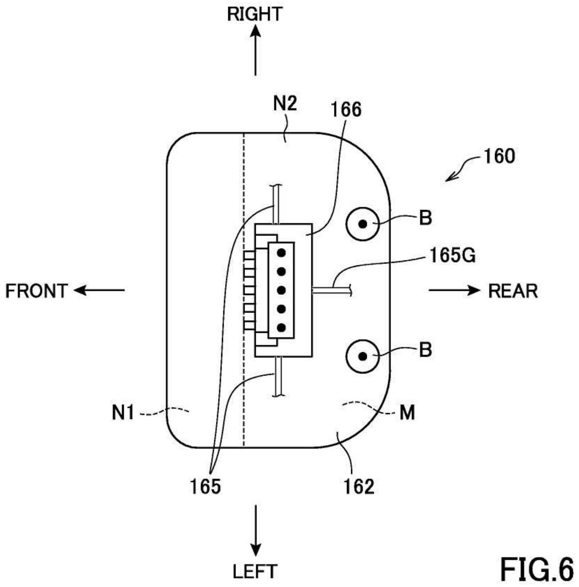

The circuit board 160 includes a substrate 162, the detection sensor 155 described above, and a circuit pattern 165 (see FIG. 6). The substrate 162 has a rectangular plate shape, and is formed of, for example, a resin. The detection sensor 155 is a sensor that outputs a detection signal corresponding to the rotation angle of the rotor 136, and in the present embodiment, has a plurality of Hall elements 164 and an encoder (not shown).

The surface of the substrate 162 of the circuit board 160 includes a contact region M and non-contact regions N1 and N2. The substrate 162 is arranged on the bottom wall 126 so as to cover the recess 127. That is, a front section of the substrate 162 is separated from the bottom wall 126 (the bottom surface of the recess 127), and a rear section of the substrate 162 is in contact with the bottom wall 126. The contact region M is a region on the inner surface of the substrate 162 facing the radial direction inner side of the duct 122 and in contact with the bottom wall 126. The first non-contact region N1 is a region of the inner surface of the substrate 162 that faces the recess 127 and is separated from the bottom wall 126. The second non-contact region N2 is the entire outer surface of the substrate 162 on the side opposite to the bottom wall 126. The Hall elements 164 and the circuit pattern 165 are not arranged in the contact region M, and are arranged in the non-contact regions N1 and N2.

The plurality of Hall elements 164 are arranged in the first non-contact region N1 of the circuit board 160. The first non-contact region N1 is located at a position that overlaps with the rotor 136 when viewed in the radial direction of the duct 122 (upper-lower direction view in FIG. 5). The contact region M is located at a position shifted in a direction along the propeller rotation axis L (rear direction) with respect to the rotor 136 when viewed in the radial direction of the duct 122.

A front section of the substrate 162 overlaps with the rotor 136 when viewed in the radial direction of the duct 122 (upper-lower direction view). The circuit board 160 is located at a position overlapping with the stator 138 when viewed in a direction along the propeller rotation axis L. Specifically, the circuit board 160 is located on the rear side of the stator 138.

Of the bottom wall 126, a wall thickness D1 of a non-contact section opposite the non-contact region N1 of the circuit board 160 is thinner than a wall thickness D2 of a contact section opposite the contact region M (see FIG. 5). In this way, because the wall thickness D1 of the non-contact section is relatively thin, the distance between the Hall elements 164 and the rotor 136 is shortened.

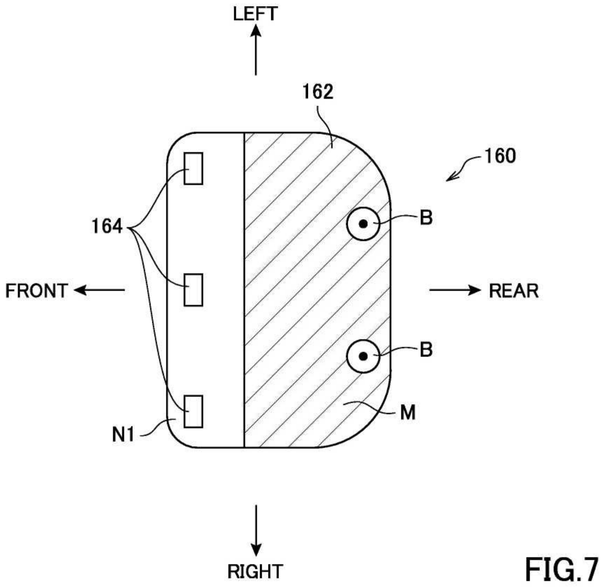

FIG. 6 is a top view showing the configuration of the circuit board 160, and FIG. 7 is a bottom view showing the configuration of the circuit board 160. As shown in FIGS. 6 and 7, the area of the contact region M on the lower surface of the circuit board 160 is larger than the area of the first non-contact region N1. The lower surface of the circuit board 160 is an example of one surface of the circuit board.

The circuit board 160 (substrate 162) is fixed to the bottom wall 126 via a plurality of fastening members B (such as bolts). The plurality of fastening members B pass through the contact region M of the circuit board 160, are screwed into the bottom wall 126, and join the circuit board 160 and the bottom wall 126. In the present embodiment, at least one of the plurality of fastening members B has conductivity. The at least one fastening member B is formed of metal. Of the circuit pattern 165 on the circuit board 160, a ground pattern 165G is electrically connected to the bottom wall 126 via the conductive fastening member B. The duct 122 functions as a ground line for the circuit board 160.

The plurality of Hall elements 164 are arranged at the front end portion of the circuit board 160. The plurality of fastening members B are arranged at a rear portion of the circuit board 160. That is, the Hall elements 164 and the fastening members B are located on opposite sides of each other on the circuit board 160.

A connector 166 is provided on the upper surface of the circuit board 160. The connector 166 is arranged in a region opposite the contact region M. The connector 166 electrically connects the circuit pattern 165 on the circuit board 160 and a cable 168. The cable 168 includes, for example, a power supply line for supplying power to the circuit board 160, a signal line for outputting detection signals from the detection sensor 155, and the like. The upper surface of the circuit board 160 is an example of an other surface of the circuit board.

As described above, the boat 10 of the present embodiment includes the cylindrical duct 122, the propeller 132 rotatably supported inside the duct 122, and the electric motor 134 that rotates the propeller 132 relative to the duct 122. The propeller 132 has the plurality of blades 131 arranged around the propeller axis L extending along the central axis of the duct 122, and the cylindrical rim 137 that surrounds the plurality of blades 131. The electric motor 134 rotates the propeller 132 relative to the duct 122. The electric motor 134 has the stator 138 provided on the duct 122 and the rotor 136 provided on the rim 137.

The accommodation space 121 is formed in the duct 122. The inner wall constituting the accommodation space 121 includes the conductive wall (bottom wall 126) having conductivity. The circuit board 160 includes the contact region M that contacts the bottom wall 126 and the non-contact regions N1 and N2 that are separated from the conductive wall. The circuit board 160 includes the detection sensor 155 and the circuit pattern 165. The detection sensor 155 outputs a detection signal corresponding to the rotation angle of the rotor 136. The circuit pattern 165 is formed in the non-contact regions N1 and N2 so as to avoid the contact region M. Because the circuit pattern 165 on the circuit board 160 is separated from the conductive wall, electrical short-circuiting between the circuit pattern 165 and the conductive wall of the duct 122 is suppressed.

In the present embodiment, the circuit board 160 is arranged on the steering device 152 side of the duct 122. According to the present embodiment, for example, the circuit board 160 being is prevented from being placed underwater compared to a configuration in which the circuit board 160 is arranged on the side of the duct 122 opposite to the steering device 152. The circuit board 160 is arranged on the bottom wall 126 on the rotor 136 side of the inner wall constituting the accommodation space 121 (see FIG. 5). Because the Hall elements 164 arranged on the circuit board 160 and the rotor 136 are arranged close to each other, the position detection accuracy by the Hall elements 164 is improved.

In the present embodiment, the circuit board 160 is arranged on the outside of the rotor 136 in the radial direction of the duct 122. According to the present embodiment, for example, an increase in size in the front-rear direction of the duct 122 is suppressed compared to a configuration in which the circuit board 160 is arranged at the same position as the rotor 136 in the radial direction of the duct 122. A front section of the substrate 162 overlaps with the rotor 136 when viewed in the radial direction of the duct 122 (upper-lower direction view of FIG. 5). According to the present embodiment, for example, an increase in size in the front-rear direction of the duct 122 is suppressed compared to a configuration in which the circuit board 160 does not overlap with the rotor 136 when viewed in the radial direction of the duct 122. The circuit board 160 is located at a position overlapping with the stator 138 when viewed in the front-rear direction. According to the present embodiment, for example, an increase in size in the radial direction of the duct 122 is suppressed compared to a configuration in which the circuit board 160 is arranged at a position shifted from the stator 138 when viewed in the front-rear direction.

In the embodiment described above, the plurality of Hall elements 164 are arranged in the first non-contact region N1 on the inner surface of the circuit board 160. According to the present embodiment, the detection accuracy of the rotation angle of the rotor 136 by the Hall elements 164 is improved, for example, compared to a configuration in which the Hall elements 164 are arranged on the outer surface of the circuit board 160.

In the above embodiment, the first non-contact region N1 in which the Hall elements 164 are arranged is located at a position overlapping with the rotor 136 when viewed in the radial direction of the duct 122 (upper-lower direction view in FIG. 5). The contact region M that contacts the bottom wall 126 is located at a position shifted in the rear direction with respect to the rotor 136 when viewed in the radial direction of the duct 122. According to the present embodiment, for example, because the distance between the Hall elements 164 and the rotor 136 is shortened compared to a configuration in which the non-contact region in which the Hall elements 164 are arranged is located at a position shifted in the front-rear direction with respect to the rotor 136 when viewed in the radial direction of the duct 122, the detection accuracy of the rotation angle of the rotor 136 by the Hall elements 164 is improved.

In the embodiment described above, of the bottom wall 126, the wall thickness of the non-contact section opposite the non-contact region N1 of the circuit board 160 is thinner than the wall thickness of the contact section opposite the contact region M. According to the present embodiment, for example, a decrease in the detection accuracy of the rotation angle of the rotor 136 by the Hall elements 164 due to the wall interposed between the Hall elements 164 and the rotor 136 is suppressed compared to a configuration in which the wall thickness of the non-contact section is greater than or equal to the wall thickness of the contact section.

In the embodiment described above, the area of the contact region M on the lower surface of the circuit board 160 is larger than the area of the first non-contact region N1. According to the present embodiment, for example, the circuit board 160 is arranged more stably with respect to the duct 122 compared to a configuration in which the area of the first non-contact region N1 is less than or equal to the area of the contact region M.

In the embodiment described above, the plurality of fastening members B pass through the contact region M of the circuit board 160, are screwed into the bottom wall 126, and join the circuit board 160 and the bottom wall 126. According to the present embodiment, for example, the contact region M where no circuit pattern is formed is effectively used to fix the circuit board 160 to the duct 122. In the embodiment described above, the plurality of Hall elements 164 are arranged at the front end portion of the circuit board 160. The plurality of fastening members B are arranged at a rear portion of the circuit board 160. According to the present embodiment, a decrease in the detection accuracy of the rotation angle of the rotor 136 by the Hall elements 164 due to electrical influence from the fastening members B is suppressed.

The configurations of the boat 10, the boat control system 10S, and the electric propulsion device 100 in the embodiment described above are examples. In particular, in the embodiment described above, the electric propulsion device 100, which is an outboard motor, is exemplified as the electric boat propulsion device. Alternatively, the electric boat propulsion device may be, for example, an inboard motor, an inboard/outboard motor, a jet propulsion device, or the like. The electric motor may be a polyphase motor other than a three-phase motor, or may be a DC motor.

In the embodiment described above, an example of the accommodation space that accommodates the circuit board was a recess located in the upper section of the duct 122 that opens toward the radial direction outer side of the duct 122. Alternatively, the accommodation space may be located in a section other than the upper section of the duct 122 (for example, a section near the center in the upper-lower direction of the duct 122 or the like). The accommodation space according to the embodiment is behind the stator 138 (stator accommodation chamber 123). Alternatively, the accommodation space may be located in front of or on the radial direction outer side of the stator 138. The accommodation space may be a recess that opens toward the radial direction inner side of the duct 122, or a recess opening to the front or rear. The accommodation space according to the embodiment is a recess. Alternatively, the accommodation space may be a closed space entirely surrounded by an inner wall.

The duct according to the embodiment entirely formed of a conductive material. Alternatively, the duct may be a duct partially formed of a non-conductive material. In other words, at least a portion of the inner wall surface constituting the accommodation space that accommodates the circuit board is a conductive wall having conductivity.

In the embodiment described above, the circuit board 160 was arranged on the bottom wall 126. Alternatively, the circuit board 160 may be arranged on a section other than the bottom wall 126 of the inner wall constituting the accommodation space 121. The circuit board 160 may be arranged at the same position as the rotor 136 in the radial direction of the duct 122, or may be arranged on the inner side the rotor 136. An example of the circuit board was the circuit board 160 including the detection sensor 155. Alternatively, the circuit board may be a circuit board that does not include the detection sensor 155 (a circuit board that includes a portion of the MCU 139 or the SCU 154). In the embodiment described above, a portion other than the front section of the substrate 162 may overlap with the rotor 136 when viewed in the radial direction of the duct 122 (upper-lower direction view), or may not overlap with the rotor 136. In the embodiment described above, the circuit board 160 may be arranged at a position shifted from the stator 138 when viewed in the front-rear direction. Alternatively, the circuit board 160 does not have to include the connector 166.

In the embodiment described above, the Hall elements 164 may be arranged on the outer surface (the second non-contact region N2) of the circuit board 160 (substrate 162). The number of Hall elements 164 arranged on the circuit board 160 may be one, or a plurality other than three. An example of the detection sensor is a magnetic sensor such as the Hall elements 164. Alternatively, it may be used a sensor that outputs a detection signal corresponding to the rotation angle of the rotor 136 by an other method (such as an optical method). An example of the detection sensor is a sensor to detect the rotation angle of the rotor 136. Alternatively, the detection sensor may be a sensor that detects an other object (for example, the steering angle of the duct 122 or the like).

In the embodiment described above, the non-contact region N1 in which the Hall elements 164 are arranged may be located at a position shifted in the front-rear direction with respect to the rotor 136 when viewed in the radial direction of the duct 122 (upper-lower direction view). In the embodiment described above, the wall thickness of the non-contact section opposite the non-contact region N1 of the circuit board 160 may be greater than or equal to the wall thickness of the contact section opposite the contact region M.

In the embodiment described above, the area of the first non-contact region N1 in the circuit board 160 may be greater than or equal to the area of the contact region M. In the above embodiment, the plurality of fastening members B may pass through the first non-contact region N1 instead of the contact region M of the circuit board 160, be screwed into the bottom wall 126, and join the circuit board 160 and the bottom wall 126. The number of fastening members B that fix the circuit board 160 may be one, or three or more. The plurality of Hall elements 164 and the plurality of fastening members B may be arranged on the same side of the circuit board 160 in the front-rear direction.

## Claims

1. An electric boat propulsion device (100) comprising:
a cylindrical duct (122);
a propeller (132) rotatably supported in the duct (122), the propeller (132) having a plurality of blades (131) arranged around a propeller axis (L) extending along a central axis of the duct (122), and a cylindrical rim (137) surrounding the plurality of blades (131); and
an electric motor (134) configured to rotate the propeller (132) relative to the duct (122), the electric motor (134) having a stator (138) provided on the duct (122) and a rotor (136) provided on the rim (137) and arranged in a radial direction of the duct (122), wherein
the duct (122) has an accommodation space (121) formed therein, and an inner wall constituting the accommodation space (121) includes a conductive wall (126) having conductivity, and
the electric boat propulsion device (100) further comprises a circuit board (160) including a contact region (M) that contacts the conductive wall (126) and at least one non-contact region (N1, N2) that is separated from the conductive wall (126), the circuit board (160) having a circuit pattern (165) formed in the non-contact region (N1, N2) so as to avoid the contact region (M).

2. The electric boat propulsion device (100) according to claim 1, wherein the circuit board (160) has a detection sensor (155) configured to output a detection signal corresponding to a rotation angle of the rotor (136).

3. The electric boat propulsion device (100) according to claim 2, further comprising a steering device (152) arranged on a radial direction outer side of the duct (122), the steering device (152) having a steering shaft (As), and is configured to rotate the duct (122) around the steering shaft (As), wherein the circuit board (160) is arranged on the steering device side of the duct (122).

4. The electric boat propulsion device (100) according to claim 2 or 3, wherein the circuit board (160) is arranged on an outer side of the rotor (136) in the radial direction of the duct (122).

5. The electric boat propulsion device (100) according to any one of claims 2 to 4, wherein at least a portion of the circuit board (160) overlaps with the rotor (136) when viewed in the radial direction of the duct (122).

6. The electric boat propulsion device (100) according to any one of claims 2 to 5, wherein the circuit board (160) is located at a position overlapping with the stator (138) when viewed in a direction along the central axis.

7. The electric boat propulsion device (100) according to any one of claims 2 to 6, wherein one surface of the circuit board (160) includes the contact region (M) and the non-contact region (N1).

8. The electric boat propulsion device (100) according to claim 7, wherein the detection sensor (155) has a Hall element (164),
the circuit board (160) has an inner surface facing a radial direction inner side of the duct (122),
the inner surface includes the contact region (M) and the non-contact region (N1), and the detection sensor (155) is arranged in the non-contact region (N1).

9. The electric boat propulsion device (100) according to claim 8, wherein the non-contact region (N1) in which the detection sensor (155) is arranged is located at a position overlapping with the rotor (136) when viewed in the radial direction of the duct (122), and the contact region (M) is located at a position shifted in a direction along the central axis of the duct (122) with respect to the rotor (136) when viewed in the radial direction of the duct (122).

10. The electric boat propulsion device (100) according to claim 8 or 9, wherein a wall thickness (D1) of a non-contact section of the inner wall opposite the non-contact region (N1) in which the detection sensor (155) is arranged is thinner than a wall thickness (D2) of a contact section opposite the contact region (M).

11. The electric boat propulsion device (100) according to any one of claims 7 to 10, wherein an area of the contact region (M) on the one surface is larger than an area of the non-contact region (N1).

12. The electric boat propulsion device (100) according to any one of claims 7 to 11, wherein the electric boat propulsion device (100) further comprises a connector (166) arranged in a region on an other surface of the circuit board (160) on an opposite side to the contact region (M) with regard to the radial direction of the duct (122).

13. The electric boat propulsion device (100) according to any one of claims 2 to 12, further comprising a fastening member (B) that passes through the contact region (M) of the circuit board (160) and joins the contact region (M) and the conductive wall (126), preferably the fastening member (B) has conductivity, and
a ground pattern (165G) of the circuit pattern (165) is electrically connected to the conductive wall (126) via the fastening member (B).

14. The electric boat propulsion device (100) according to claim 13, wherein the detection sensor (155) has a Hall element (164), and
the Hall element (164) is arranged at one end portion of the circuit board (160), and the fastening member (B) is arranged at an other end portion of the circuit board (160) with regard to the central axis of the duct (122).

15. A boat (10), comprising:
a boat body (200); and the electric boat propulsion device (100) according to any one of claims 1 to 14 arranged on the boat body (200).
